(19) **Europäisches Patentamt**
**European Patent Office**
**Office européen des brevets**

(11) **EP 2 073 130 A1**

(12) **EUROPEAN PATENT APPLICATION**

(43) Date of publication:
**24.06.2009 Bulletin 2009/26**

(51) Int Cl.:
***G06F 17/30*** *(2006.01)*

(21) Application number: **07024419.9**

(22) Date of filing: **17.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Sony Corporation**
**Minato-ku**
**Tokyo 108-0075 (JP)**

(72) Inventors:
• **Hagg, Wilhelm**
**70327 Stuttgart (DE)**
• **Eggink, Jana**
**70327 Stuttgart (DE)**

(74) Representative: **Müller - Hoffmann & Partner**
**Patentanwälte**
**Innere Wiener Strasse 17**
**81667 München (DE)**

(54) **Method and device for content recommendation**

(57)    A Method for content recommendation, comprising providing a first user profile and a second user profile, wherein said first user profile is based on long term user feedback of a first period of time, and said second user profile is based on short term user feedback of a second period of time, said first period of time being longer than said second period of time; updating said first and second user profiles based on user feedback; and selecting a content item from a content item data base depending on said first and second user profile.

FIG. 1A

EP 2 073 130 A1

**Description**

BACKGROUND

Today, large databases exist comprising several thousands or millions of content items, e.g. music databases comprising songs. Further, there exist methods to select and recommend content items of such database to a user. The recommended content items should match the user's interests.

It is an object of embodiments of the invention to provide a method and device for content recommendation allowing a recommendation that matches the user's interests.

This object is solved by a method and device according to claims 1, and 16, respectively.

Further details of embodiments of the invention will become apparent from a consideration of the drawings and ensuing description.

BRIEF DESCRIPTION OF THE SEVERAL VIEWS OF THE DRAWINGS

**Fig. 1**    shows steps of an embodiment of the invention;

**Fig. 2**    shows a diagram for illustrating first and second periods of time;

**Fig. 3**    shows steps of a further embodiment of the invention;

**Fig. 4**    shows a diagram for illustrating a weighting according to an embodiment of the invention;

**Fig. 5**    shows further steps according to a further embodiment of the invention;

**Fig. 6**    shows still further steps of a further embodiment of the invention;

**Fig. 7**    shows different conditions according to a further embodiment of the invention;

**Fig. 8**    shows an embodiment of a device for content recommendation.

DETAILED DESCRIPTION

In the following, embodiments of the invention are described. It is important to note that all embodiments described in the following may be combined in any way, i.e. there is no limitation that certain described embodiments may not be combined with others.

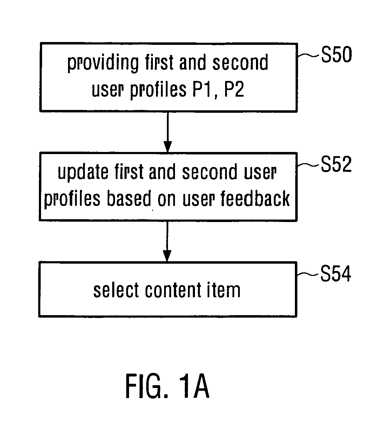

In Fig. 1A. in a step S50, a first user profile P1 and a second user profile P2 are provided. The first user profile P1 may be based on long term user feedback of a first period of time, and the second user profile P2 may be based on short term user profile of a second period of time, wherein the first period of time is longer than the second period of time. Thus, the first user profile may also be referred to as "long term user profile" and the second user profile may also be referred to as "short term user profile". The long term user profile may depend on user feedback given within e.g. one year or one week depending on the application the user profiles are used in. The short term user profile may depend on user feedback given within one day or within a last hour, again depending on the application the user profiles are used in.

In a further embodiment, there may be more than two user profiles used in parallel, for example there could be n user profiles each for a respective period of time. For example there could be four user profiles for the following four periods of time: one year, one week, one day and last hour.

In Fig. 1A in step S52, the first and second user profiles are updated based on user feedback.

Then, in step S54 a content item is selected from a content item data base depending on the first and second user profiles P1, P2.

In a further embodiment, in step S52, it is also possible that the updating of the first user profile based on the user feedback is different from the updating of the second user profile based on the user feedback. In other words, the long term user profile may be updated differently than the short term user profile.

In a further embodiment of the invention, the second user profile P2 may be reset if a predetermined condition is fulfilled.

In a further embodiment, the first user profile may be updated based on the user feedback and a previous user feedback, wherein the previous user feedback is weighted with a first weighting factor and the user feedback is weighted with a second weighting factor, said first weighting factor being smaller than said second weighting factor. Thus, when updating the first user profile based on the user feedback, the user feedback has a first influence on the first user profile, and, when updating the first user profile based on the following user feedback, the user feedback has a second influence on the first user profile, wherein the first and second influences are the same and the following user feedback was given by the user after the user feedback.

Similarly, the second user profile may be updated based on the user feedback and previous user feedback, wherein the previous user feedback is weighted with a first weighting factor and the user feedback is weighted with a second weighting factor, said first weighting factor being smaller than said second weighting factor. Thus, when updating the second user profile based on the user feedback, the user feedback may have a first influence on the second user profile, and, when updating the second user profile based on a following user feedback, the user feedback may have a second influence on the second user profile, wherein the first and second influences are the same and the following user feedback was given by the user after the user feedback.

In a further embodiment, it may also be possible that a total number of user feedbacks from which the second user profile P2 depends is limited. Thus, it is e.g. possible that the second user profile may only depend on a last predetermined number of user feedbacks. For example the second user profile may also only depend on the last 20 feedbacks, the user has given.

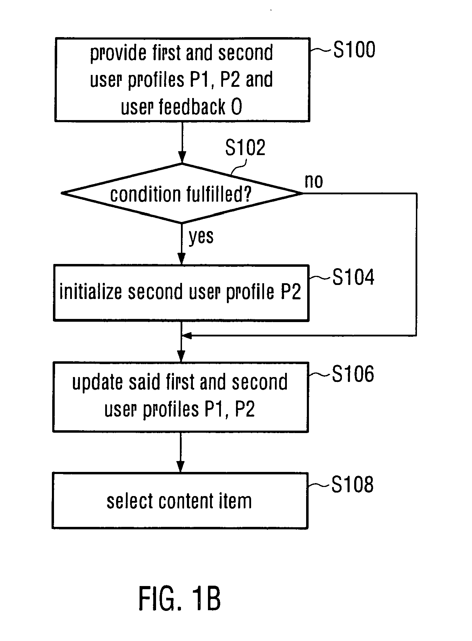

In Fig. 1B, in a step S100, a first user profile P1, and a second user profile P2, and user feedback O are provided.

In an embodiment of the invention, the first user profile P1 may be based on long term user feedback, i.e. feedback collected during a longer period of time, and said second user profile may be based on a short term user feedback, i.e. feedback collected during a shorter period of time. Thus, the first user profile P1 may also be referred to as "long term user profile" and the second user profile P2 may also be referred to as "short term user profile".

In step S102, it is checked if a predetermined condition is fulfilled. If the method illustrated in Fig. 1B is e.g. integrated in an application or runs on a device, then the condition in a further embodiment of the invention might e.g. be fulfilled if the device/application is switched on/started or if the user has not used the device/application for a longer period of time, e.g. the user has not used the device/application over night.

If, in step S102, it is detected that the condition is fulfilled, then in step S104 the second user profile P2 is initialized or reset. "Initialization" means to set the second user profile P2 to an initial state, e.g. zero, thereby e.g. erasing any data that had been obtained during previous feedback sessions. Thus, the term "initializing" may also be understood as "resetting". A feedback session may be a period of time during which a user actively uses an application/device. The activity of the user might be detected by observing the user, e.g. if the user gives feedback then this is a clear indication of active behavior.

In step S106, the first and second user profiles are updated based on the provided user feedback.

Further, in step S108, a content item is selected from a content item database depending on the first and second user profiles P1, P2. A content item may e.g. be any kind of data such as a piece of music, a video, still pictures or any other kind of data the user might be interested in.

It should be noted that by initializing the second user profile in step S104, it may be possible to take into account the short term interest of the user. For example, the user may have during a very long period of time e.g. during one year or more, given feedback that indicates that he likes classical music and pop music of the 1980s. If a recommendation were only based on a first user profile reflecting this situation, then recommendations would be mixed, i.e. there would be a mixture of recommendations from classical music and pop of the 1980s. However, if the user e.g. wakes up in the morning, and the system recommends a piece of classical music and the user rates this negative, i.e. gives feedback that he does not like the recommended content item, then this information might be stored in the second user profile. Since the second user profile has been initialized/reset in step S104, the feedback given in the morning might be used such that during a following usage session, no piece of classical music is recommended to the user.

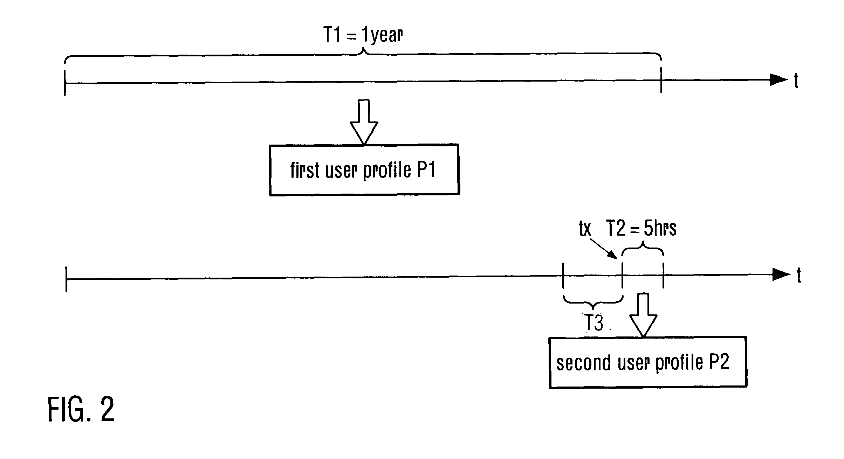

As already mentioned, according to a further embodiment of the invention the first user profile might be based on long term user feedback of a first period of time, and the second user profile might be based on short term user feedback of a second period of time, wherein the first period of time is longer than the second period of time. This is illustrated in Fig. 2, where a first period of time T1 is depicted which is equal to one year. Further, a second period of time T2 is depicted which is equal to five hours. The first user profile P1 might be based on data collected during the first period of time T1, and the user profile P2 might only be based on data collected during the second period of time T2.

The beginning $t_x$ of the second period of time T2 may correspond to the beginning of a usage session. For example, the beginning $t_x$ might be determined if an application/device using the method is started/restarted. Also, in order to determine the beginning of a session $t_x$ the daytime might be taken into account. For example, if the user switches on the application/device after inactivity over night, then it might be determined that a new usage session has started. Also, inactivity within a third period of time T3 might be an indication for the beginning $t_x$ of a new session. The third period of time T3 may be in the range of six to nine hours or longer.

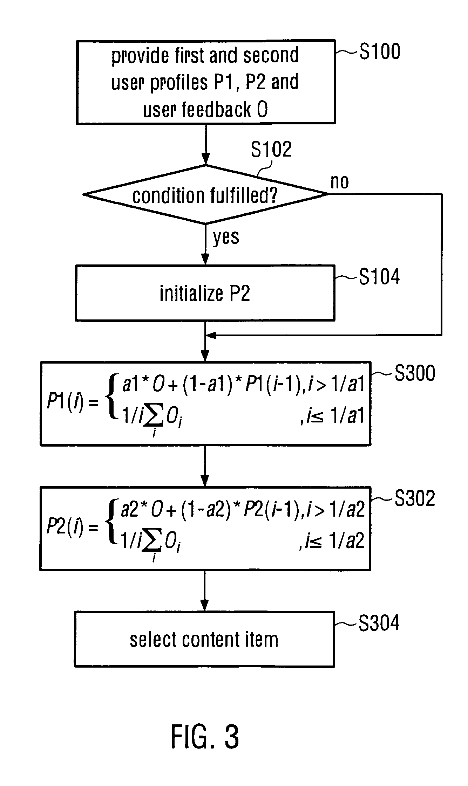

Fig. 3 shows a further embodiment of the invention, wherein steps S100, S102, and S104 correspond to the respective steps of Fig. 1B.

However, in the embodiment of Fig. 3, in step S300, the first user profile P1 is updated based on the following formula:

$$P1(i) = \begin{cases} a1 * O + (1 - a1) * P1(i-1), i > 1/a1 \\ 1/i \sum_i O_i, i \leq 1/a1 \end{cases}$$

eq. (1)

with

P1(i):      updated first user profile,
P1(i-1):    first user profile,
O:          user feedback,
a1:         first weighting factor.

The index i indicates a time where feedback has been given, in the following also referred to as feedback data point. Thus, according to equation (1), as can be seen, as long as i<1/al, the feedback is equally weighted in each case, i.e. for each feedback data point. On the other hand, if i>1/a1, then new feedback O is weighted by factor a1, and previous feedback represented by the previous user profile P1(i-1) is weighted by a factor (1-a1).

The factor a1 might be in the range of 0<al<1. A typical/good value of a1 might be 0,01.

In a further step S302, the second user profile P2 is updated based on the following formula:

$$P2(i) = \begin{cases} a2 * O + (1 - a2) * P2(i-1), i > 1/a2 \\ 1/i \sum_i O_i, i \leq 1/a2 \end{cases}$$

eq. (2)

with

P2(i):      updated second user profile,
P2(i-1):    second user profile,
O:          user feedback,
a2:         first weighting factor.

As can be seen, the updating of the second upper profile P2 is similar to updating the first user profile P1.

In a further embodiment, the factor a2 might be in the range of 0<a2<1. A good/typical value of a2 is 0,1.

Generally, regarding the factors a1, a2, the bigger the value of a1, a2 is, the faster the respective profile "forgets" about past observations (user feedback) and adapts to new observations.

In a further embodiment, factors a1 and a2 may depend on the number of observations O (user feedback) within a predetermined time period. If there are many observations the weights may decrease so that the profile change per time interval becomes constant or at least more constant than with simple adding of observations.

In step S304, a content item is selected from a content database depending on the first and second user profiles P1 (i), P2 (i), updated in steps 300 and S302.

The more general idea of the embodiment of Fig. 3 is that in a first period of time (i□1/a1) the first and second user profiles P1, P2 are updated based on user feedback weighted with a first weighting factor, wherein the first weighting factor depends on the total number of user feedbacks within the first period of time, and in a second period of time, the user feedback is weighted with a second weighting factor, said second weighting factor being independent of the total number of user feedbacks within the second period of time (i>1/a1).

Thus, for example, if there is one observations o1, a second observations o2 would be weighted with 0.2 and in consequence the observation o1 which defines the whole profile at that time would be actually weighted with 0.8.

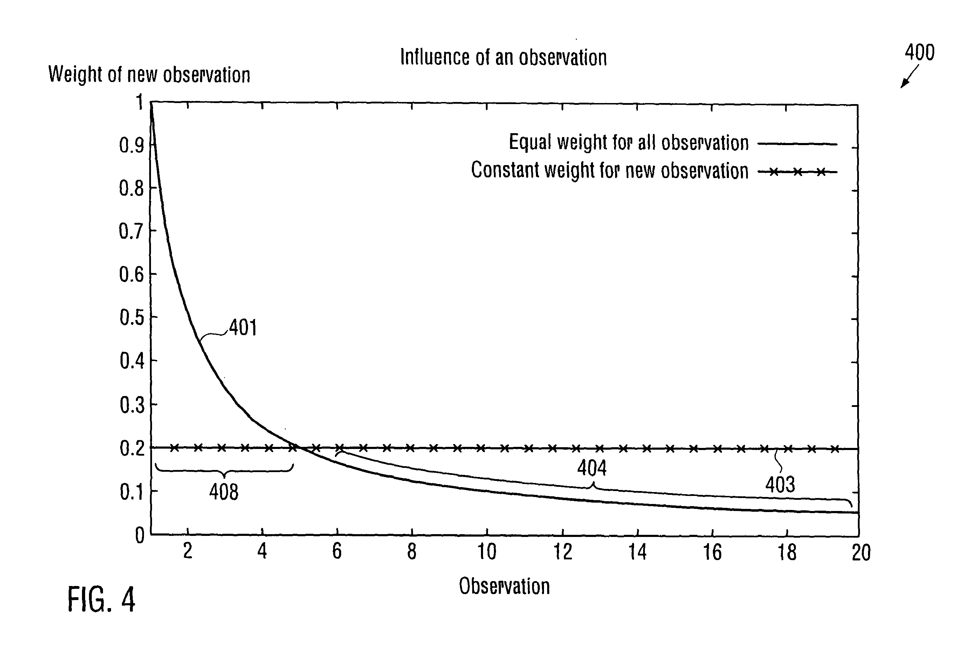

Fig. 4 shows a diagram 400 illustrating the updating of the user profile P1 according to equations (1). The updating of user profile P2 may be done analogously.

In diagram 400, a first graph 401 and second graph 403 is shown. First graph 401 represents the weighting of feedback if i>1/a1, and second graph 403 represents the weighting of feedback if i<1/a1.

In the example of Fig. 4, the weighting factor a1 of equation (1) is equal to 5. Thus, for the first five given feedbacks $O_1, ..., O_5$, the feedback is weighted by the constant factor 1/5 = 0,2, as indicated by reference sign 408 in Fig. 4. Please note that a1=5 is merely chosen to illustrate basic principles of this embodiment of the invention and should not be understood as limiting in any way. As said above, a1 may e.g. be chosen to be in the range of 0,01.

After the user has given feedback for the fifth time, the weighting of the feedback corresponds to a1*O + (1-a1)*P1 (i-1) as indicated by reference sign 404 in Fig. 4.

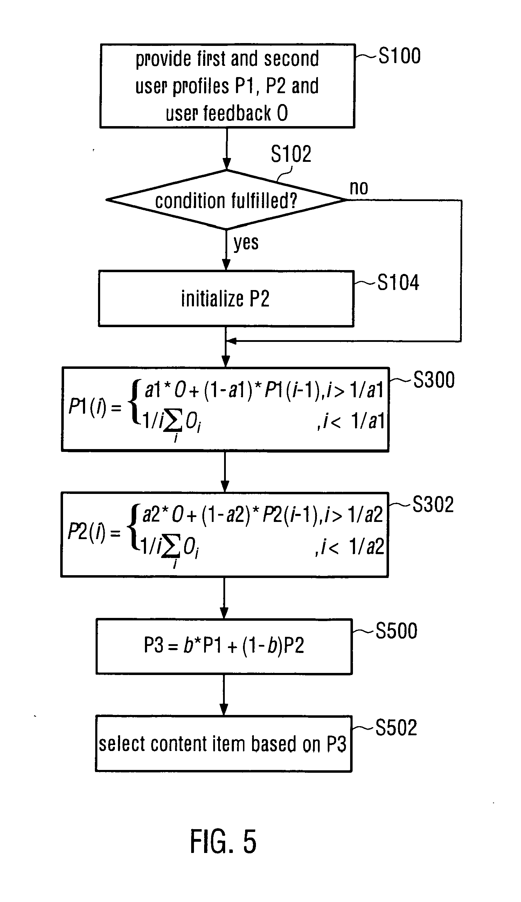

Fig. 5 shows a further embodiment of the invention, wherein steps S100, S102, S104, S300, and S302 correspond to the respective steps of Fig. 3.

In step S500, however, a combined user profile P3 is determined based on the following formula:

$$P3 = b*P1 + (1-b)*P2 \qquad\qquad eq.\ (3)$$

with

P1:   first user profile,
P2:   second user profile,
P3:   combined user profile, and
b:    third weighting factor.

The third weighting factor b controls the influence of the first and second user profiles P1, P2. As said above, in an embodiment of the invention, the first user profile P1 might correspond to a long term user profile, and the second user profile P2 corresponds to a short term user profile of a current usage session. Thus, by equation (3) an influence of the long term user profile P1 and short term user profile P2 on a following recommendation which is determined in step S502 based on the combined user profile P3 might be determined.

In a further embodiment, the factor b might be in the range of 0<b<1. A good/typical value of b is 0,5. The bigger factor b is, the more long term recommendations may be given.

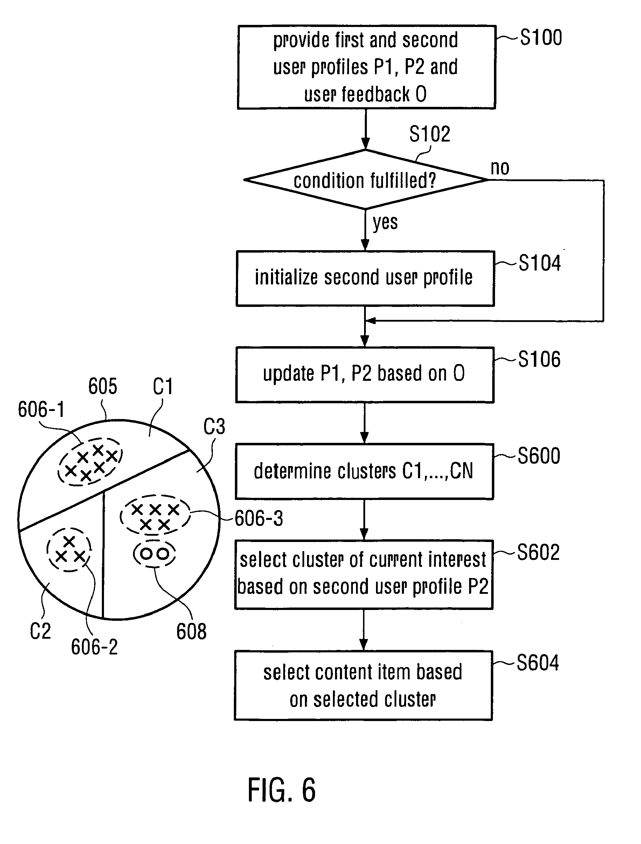

Fig. 6 shows a further embodiment of the invention, wherein steps S100, S102, S104, and step S106 correspond to the respective steps of Fig. 1B.

However, in the embodiment of Fig. 6, in step S600, clusters C1, ..., Cn of the feedback data of the first user profile P1 are determined.

On the left-hand side of Fig. 6, feedback data 606 that have been used for generating the first user profile P1 are depicted. Feedback data 606 might be illustrated in a respective feedback space 605. By using a clustering algorithm, clusters C1, C2, C3 in the feedback data 606 might be identified. A first cluster C1 comprising feedback data 606-1 might indicate that the user has an interest in classical music. Feedback data 606-2 of second cluster C2 might indicate that the user has a further interest in pop of the 1970s. Further feedback data 606-3 of the third cluster C3 might indicate that the user also has an interest in acid jazz.

In step S602, a cluster of current interest out of the clusters C1, ..., Cn might be selected based on the second user profile P2 and/or based on feedback data 608 of second user profile P2. In the example of Fig. 6, feedback data 608 may have been used to generate second user profile 608. In the feedback space 605, the feedback data 608 of second user profile P2 is close to feedback data 606-3 of the first user profile P1. Thus, this may be an indication that the current interest of the user corresponds to content items similar to items of the third cluster C3, i.e. currently the user might be interested in acid jazz.

Eventually, in step S604, a content item is selected from the content item database depending on the selected cluster, i.e. in the example of Fig. 6, depending on the third cluster C3.

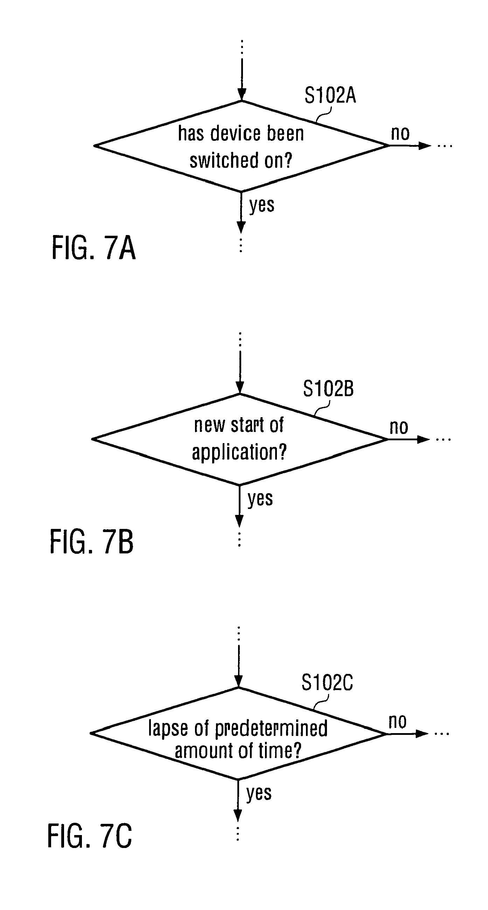

Fig. 7 shows examples of different predetermined conditions. As explained in connection with Fig. 2, a predetermined condition S102 defines the start of a new usage session. For example, as depicted in Fig. 7a, a new session might start in a step S102-A if a device/application has been switched on by the user. Further, as depicted in Fig. 7b, a new session might start upon newly starting (re-starting) of an application in a step S102-B. Further, as depicted in Fig. 7C, a new session might start in a step S102-C if a predetermined amount of time has lapsed (e.g. third period of time T3 as shown in Fig. 2).

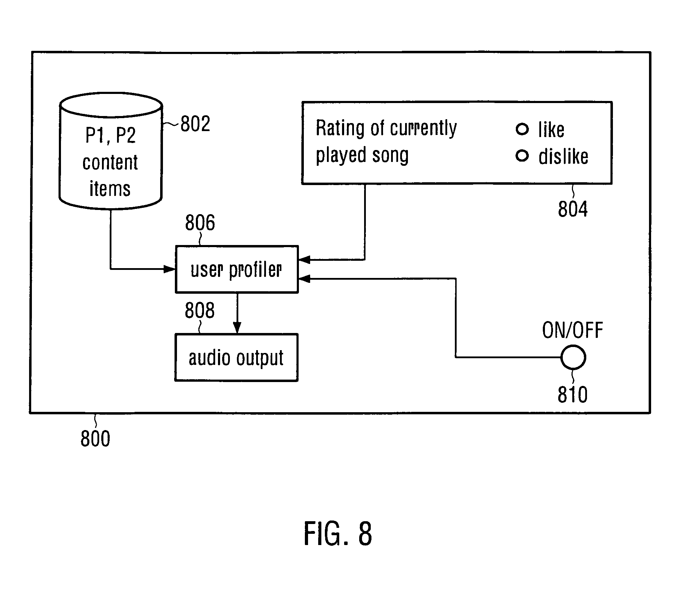

Fig. 8 shows a device 800 for content recommendation. Device 800 comprises a storage 802 configured to store a first user profile P1, a second user profile P2, and a content item database. Device 800 further comprises a feedback mechanism 804, user profiler 806, and audio output unit 808.

The feedback mechanism 804 may be configured to allow a user to enter user feedback. For example, the feedback mechanism 804 may allow a user to rate a currently played song with like or dislike. Alternatively, the feedback mechanism may also collect implicit feedback, i.e. feedback for which the user does not need to explicitly input feedback. An example of implicit feedback is e.g. the time a user listens to a song without skipping the song.

The user profiler 806 receives the feedback of the feedback mechanism 804 and is configured to initialize/reset the second user profile P2, if a predetermined condition is fulfilled. The user profiler 806 is further configured to update the first and second user profiles P1, P2 based on the user feedback, and to select a content item from the content item database stored in data storage 802 depending on the first and second user profiles P1, P2.

The device 800 may be e.g. a handheld device and in a further embodiment may comprise a switch 810 for switching on/off device 800. If the device is switched on/off via switch 810, this information might be passed on to user profiler 806. If the device is switched on, then user profiler 806 might initialize/reset the second user profile P2. In other words, if device 800 is switched on, then it is determined that the predetermined condition is fulfilled.

User profiler 806 may update the first and second user profiles P1, P2 as described above. Further, user profiler 806 might select a content item as described above.

A content item that has been selected by user profiler 806 might be passed on to audio output unit 808 configured to play/present the respective content item to the user.

The following elucidations might help to get a better understanding of embodiments of the invention:

In personalized music recommendation systems observations such as like/dislike button presses or skip operations are used to generate a user profile as a statistical model on a defined feature space. This model is usually based on all available observations which results in the fact that the impact of a single observation on the profile decreases with the number of observations and the profile tends to become more static over time.

With the temporal user profile of embodiments of the invention described above, the observations might be weighted in a way, that the impact of a new observation on the profile becomes constant. In one embodiment, achieving this is to utilize only the last N observations for generating the statistical model.

In a further embodiment the statistical model is built by assigning a constant weight "a" to the feature vector "O" of a new observation. The profile P is then given as a sum of the new feature vector and the previous profile vector. This could be expressed as follows:

$$P_i = a \cdot O_i + (1-a) \cdot P_{i-1}$$

For the first few observations made for a profile the impact of each observation is higher than the given constant weight a. For that reason the weighting scheme is applied only if the number of observations is more than the reciprocal value of a. The final weighting scheme might then be expressed as follows:

$$P_i = \begin{cases} a \cdot O_i + (1-a) \cdot P_{i-1} & i > 1/a \\ 1/i \sum_i O_i & i \le 1/a \end{cases}$$

The influence of an observation is plotted in Fig. 4. Graph 401 shows the influence of an observation without weighting and illustrates the fact that the impact on a profile decreases over the number of observations. Graph 403 illustrates the constant impact for a=0.2. In this case the weighting scheme would be applied from the 6th observation.

The described scheme for building a statistical model will result in a profile that forgets about past observations after a number of new observations. Since the user taste is not changing over the number of observations but over time, the profile generation could be adapted in a way, that the profile forgets about past observations based on the time interval instead of the number of observations.

In order to model the short term interest of a music listener as well as the general user taste two profiles might be applied: a long term profile L that takes into account a big number of observations and a short term profile S that utilizes only a few observations. Besides the number of observations it might be sensible to limit the observations of the short term profile to a time period that reflects the current user interest, which is in the range of minutes or maybe hours. In order to do recommendations based on both profiles a certain number of recommendations might be taken from each profile or the profiles might be combined by a weighting factor b such as:

$$P_i = b \cdot S_i + (1 - b) \cdot L_i$$

Such a recommendation system would be able to react to the short term user preferences and thus increase the user needs for recommendation systems.

**Claims**

1.   A Method for content recommendation, comprising:

providing a first user profile and a second user profile, wherein said first user profile is based on long term user feedback of a first period of time, and said second user profile is based on short term user feedback of a second period of time, said first period of time being longer than said second period of time;
updating said first and second user profiles based on user feedback;
selecting a content item from a content item data base depending on said first and second user profile.

2.   The Method according to claim 1, wherein, if a predetermined condition is fulfilled, said second user profile is reset.

3.   The Method according to claim 1 or 2, wherein when updating said first user profile said user feedback is weighted with a first factor, and when updating said second user profile said user feedback is weighted with a second factor, which first factor is lower than said second factor.

4.   The Method according to any of the preceding claims, wherein said first user profile is updated based on said user feedback and previous user feedback, wherein said previous user feedback is weighted with a first weighting factor and said user feedback is weighted with a second weighting factor, said first weighting factor being smaller than said second weighting factor.

5.   The Method according to claim 4, wherein said first weighting factor depends on a number of feedbacks lying between said previous user feedback and said user feedback.

6.   The Method according to claim 1 or 5, wherein said first user profile is updated based on the following formula:

$$P1(i) = a1 * O + (1-a1) * P1(i-1),$$

with

P1(i): updated user profile,
P1(i-1): first user profile,
O: user feedback,
a1: first weighting factor.

7.   The method of claim 6, wherein a1 depends on a number of feedbacks within a predetermined time period.

8.   The Method according to any of the preceding claims, wherein said second user profile is updated based on said user feedback and previous user feedback, wherein said previous user feedback is weighted with a first weighting factor and said user feedback is weighted with a second weighting factor, said first weighting factor being smaller than said second weighting factor.

9.   The Method according to any of the preceding claims, wherein said second user profile is updated based on the following formula:

$$P2(i) = a2 * O + (1-a2) * P2(i-1),$$

7

with

P2(i): updated user profile,
P2(i-1): second user profile,
O: user feedback,
a2: second weighting factor.

**10.** The method of claim 9, wherein a2 depends on a number of feedbacks within a predetermined time period.

**11.** The Method according to any of the preceding claims, wherein, in a first period of time, said first user profile is updated based on said user feedback weighted with a first weighting factor, said first weighting factor depending on the total number of user feedbacks within said first period of time, and in a second period of time said user feedback is weighted with a second weighting factor, said second weighting factor being independent of the total number of user feedbacks within said second period of time.

**12.** The Method according to claim 11, wherein said first user profile is updated based on the following formula:

$$P1(i) = \begin{cases} a1 * O + (1 - a1) * P1(i - 1), i > 1/a1 \\ 1/i \sum_i O_i, i \le 1/a1 \end{cases},$$

with

P1(i): updated first user profile,
P1(i-1): first user profile,
O: user feedback,
a1: first weighting factor.

**13.** The Method according to claim 12, wherein a1 is in the range of 0,01.

**14.** The Method according to any of the preceding claims, wherein, in a first period of time, said second user profile is updated based on said user feedback weighted with a first weighting factor, said first weighting factor depending on the total number of user feedbacks within said first period of time, and in a second period of time said user feedback is weighted with a second weighting factor, said second weighting factor being independent of the total number of user feedbacks within said second period of time.

**15.** The Method according to any of the preceding claims, wherein said second user profile is updated based on the following formula:

$$P2(i) = \begin{cases} a2 * O + (1 - a2) * P2(i - 1), i > 1/a2 \\ 1/i \sum_i O_i, i \le 1/a2 \end{cases},$$

with

P2(i): updated second user profile,
P2(i-1): second user profile,
O: user feedback,
a2: first weighting factor.

**16.** The Method according to claim 15, wherein a2 is in the range of 0,1.

**17.** The Method according to any of the preceding claims, wherein when selecting said content item a combined user profile is determined by combining said first and second user profiles, and said combined user profile is used in a recommendation engine.

18. The Method according to claim 17, wherein said combined user profile is determined based on the following formula:

$$P3 = b*P1 + (1-b)*P2,$$

with

P1: first user profile,
P2: second user profile,
P3: combined user profile, and
b: third weighting factor.

19. The Method according to any of claims 1 to 16, wherein said first user profile is based on previous feedback data, and said method comprises:

determining at least two clusters of said previous feedback data based on a clustering algorithm;
selecting at least one of said clusters based on said second user profile;
selecting said content item based on a selected cluster.

20. The Method according to any of the preceding claims, wherein an application is based on said method, and wherein said condition is fulfilled if said application is newly started or if a user has not used said application for a predetermined period of time.

21. A Device for content recommendation, comprising:

a storage configured to store a first user profile, a second user profile, and a content item data base;
a feedback mechanism configured to receive user feedback;
a user profiler configured to reset said second user profile if a predetermined condition is fulfilled, to update said first and second user profiles based on said user feedback, and to select a content item from said content item data base depending on said first and second user profile.

22. The Device according to claim 21, wherein said condition is fulfilled if said device is switched on or if a user has not used the device for a predetermined period of time.

23. A Method for content recommendation, comprising:

providing a first user profile and a second user profile, wherein said first user profile is based on long term user feedback of a first period of time, and said second user profile is based on short term user feedback of a second period of time, said first period of time being longer than said second period of time;
updating said first and second user profiles based on user feedback, wherein said first/ second user profile is updated based on said user feedback and previous user feedback, wherein said previous feedback is weighted with a first weighting factor and said user feedback is weighted with a second weighting factor, said first weighting factor being smaller than said second weighting factor;
selecting a content item from a content item data base depending on said first and second user profile.

24. The method according to claim 23, wherein said first/second user profile is updated based on the following formula:

$$P1(i) = a1 * O + (1-a1) * P1(i-1),$$

with

P1(i): updated user profile,
P1(i-1): first/second user profile,

O: user feedback,
a1: first weighting factor.

providing first and second
user profiles P1, P2 — S50

update first and second user
profiles based on user feedback — S52

select content item — S54

# FIG. 1A

```
┌─────────────────────────┐
│   provide first and second  │──S100
│   user profiles P1, P2 and  │
│      user feedback O        │
└─────────────────────────┘
              │
              ▼      S102
         ╱─────────────╲          no
        ╱ condition fulfilled? ╲──────────┐
         ╲─────────────╱                  │
              │ yes                        │
              ▼                            │
┌─────────────────────────┐               │
│ initialize second user profile P2 │──S104 │
└─────────────────────────┘               │
              │◄───────────────────────────┘
              ▼
┌─────────────────────────┐
│   update said first and second │──S106
│      user profiles P1, P2     │
└─────────────────────────┘
              │
              ▼
┌─────────────────────────┐
│      select content item      │──S108
└─────────────────────────┘
```

FIG. 1B

EP 2 073 130 A1

T1 = 1year

————————————————————————————→ t

⇓

first user profile P1

tx  T2 = 5hrs

————————————————————————————→ t

T3

⇓

second user profile P2

FIG. 2

provide first and second
user profiles P1, P2 and
user feedback O  —S100

condition fulfilled?  S102  no

yes

initialize P2  —S104

$$P1(i) = \begin{cases} a1 * O + (1-a1) * P1(i-1), i > 1/a1 \\ 1/i \sum_i O_i \qquad , i \le 1/a1 \end{cases}$$  —S300

$$P2(i) = \begin{cases} a2 * O + (1-a2) * P2(i-1), i > 1/a2 \\ 1/i \sum_i O_i \qquad , i \le 1/a2 \end{cases}$$  —S302

select content item  —S304

FIG. 3

400

Influence of an observation

Weight of new observation

1 —
0.9 —
0.8 —
0.7 —
0.6 —
0.5 —
0.4 —
0.3 —
0.2 —
0.1 —
0 —

2   4   6   8   10   12   14   16   18   20

Observation

Equal weight for all observation
Constant weight for new observation

401

403

404

408

FIG. 4

provide first and second
user profiles P1, P2 and
user feedback O  —S100

condition fulfilled?  S102

no

yes

initialize P2  —S104

$$P1(i) = \begin{cases} a1*O + (1-a1)*P1(i-1), i > 1/a1 \\ 1/i\sum_i O_i \qquad\qquad , i < 1/a1 \end{cases}$$  —S300

$$P2(i) = \begin{cases} a2*O + (1-a2)*P2(i-1), i > 1/a2 \\ 1/i\sum_i O_i \qquad\qquad , i < 1/a2 \end{cases}$$  —S302

$$P3 = b*P1 + (1-b)P2$$  —S500

select content item based on P3  —S502

FIG. 5

provide first and second
user profiles P1, P2 and
user feedback O  — S100

condition fulfilled?  — S102

no

yes

initialize second user profile  — S104

update P1, P2 based on O  — S106

determine clusters C1,...,CN  — S600

select cluster of current interest
based on second user profile P2  — S602

select content item based
on selected cluster  — S604

605  C1

606-1

C3

606-3

C2  606-2  608

FIG. 6

S102A

has device been
switched on?                no    ...

yes

FIG. 7A

S102B

new start of
application?                 no    ...

yes

FIG. 7B

S102C

lapse of predetermined
amount of time?             no    ...

yes

FIG. 7C

FIG. 8

**European Patent Office**

## EUROPEAN SEARCH REPORT

Application Number

EP 07 02 4419

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 654 735 B1 (EICHSTAEDT MATTHIAS [US] ET AL) 25 November 2003 (2003-11-25) * columns 1-2,5-11; figures * ----- | 1-24 | INV. G06F17/30 |
| X | GB 2 396 934 A (BRITISH TELECOMM [GB]) 7 July 2004 (2004-07-07) * the whole document * ----- | 1-16, 19-24 | |
| X | WO 02/080056 A (BRITISH TELECOMM [GB]; THINT MARCUS [US]; CASE SIMON JAMES [GB]; AZARM) 10 October 2002 (2002-10-10) * the whole document * ----- | 1-16, 19-24 | |
| X | WO 2005/071570 A (KONINKL PHILIPS ELECTRONICS NV [NL]; PHILIPS CORP [US]; VIGNOLI FABIO) 4 August 2005 (2005-08-04) * pages 3-8 * ----- | 1,21,23 | |
| | | | TECHNICAL FIELDS SEARCHED (IPC) G06F G06Q |

The present search report has been drawn up for all claims

| Place of search | Date of completion of the search | Examiner |
|---|---|---|
| Munich | 11 July 2008 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                          EP 07 02 4419

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2008

| Patent document cited in search report | | Publication date | Patent family member(s) | | Publication date |
|---|---|---|---|---|---|
| US 6654735 | B1 | 25-11-2003 | NONE | | |
| GB 2396934 | A | 07-07-2004 | CA<br>US | 2453588 A1<br>2004128301 A1 | 30-06-2004<br>01-07-2004 |
| WO 02080056 | A | 10-10-2002 | CA | 2442612 A1 | 10-10-2002 |
| WO 2005071570 | A | 04-08-2005 | CN<br>EP<br>JP | 1910582 A<br>1709560 A2<br>2007524955 T | 07-02-2007<br>11-10-2006<br>30-08-2007 |

EPO FORM P0459

For more details about this annex : see Official Journal of the European Patent Office, No. 12/82